(19) Europäisches Patentamt
European Patent Office
Office européen des brevets

(11) **EP 2 688 216 B1**

(12) **FASCICULE DE BREVET EUROPEEN**

(45) Date de publication et mention de la délivrance du brevet:
**04.03.2015 Bulletin 2015/10**

(51) Int Cl.:
***H04B 1/74*** *(2006.01)*     ***H04B 7/08*** *(2006.01)*

(21) Numéro de dépôt: **13176430.0**

(22) Date de dépôt: **15.07.2013**

(54) **Formateur de voies pre-conditionne reconfigurable pour reseau antennaire**

Rekonfigurierbarer und präkonditionierter Signalwegformer für Antennennetz

Reconfigurable pre-conditioned channel former for an antenna array

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2012 FR 1202062**

(43) Date de publication de la demande:
**22.01.2014 Bulletin 2014/04**

(73) Titulaire: **Thales**
**92200 Neuilly Sur Seine (FR)**

(72) Inventeurs:
- **Segura, Eric**
  **78990 Elancourt (FR)**
- **Chabod, Luc**
  **78150 Le Chesnay (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**EP-A1- 2 363 729**     **EP-A1- 2 363 917**
**US-A- 5 557 603**

**Description**

L'invention concerne le domaine des réseaux antennaires, autrement dit les antennes composées d'une pluralité d'éléments rayonnants qui peuvent être organisés en sous-réseaux indépendants. Elle concerne en particulier les antennes actives à balayage électronique et plus précisément la chaîne de réception de telles antennes.

L'invention porte sur un dispositif de formation de voies pré-conditionné mais reconfigurable qui permet de router les signaux reçus par les différents éléments rayonnants de l'antenne vers une pluralité de récepteurs ou voies de réception distinctes.

Le problème technique visé par la présente invention consiste à rendre robuste l'architecture de réception d'un réseau antennaire et de maîtriser la dégradation des performances de ce réseau antennaire dans le cas où un nombre donné de voies de réception sont indisponibles, soit du fait d'une panne soit de par une affectation de ces voies à une utilisation réservée.

Lorsqu'une ou plusieurs voies de réception sont indisponibles, le dispositif de formation de voies doit toujours permettre la réception et le traitement de l'ensemble des signaux de sortie des éléments rayonnants de l'antenne, à minima sous la forme d'un signal se composant de la somme des signaux de sortie des éléments rayonnants.

Par ailleurs un tel dispositif doit répondre à des contraintes limitatives de complexité et de compacité qui obligent à une optimisation de son implémentation car une reconfigurabilité totale de la matrice de routage mise en oeuvre par ce dispositif n'est le plus souvent pas requise. Autrement dit, les possibilités offertes par un formateur de voies permettant de router n'importe quelle sortie d'éléments rayonnants vers n'importe quel récepteur n'est souvent pas nécessaire. Ces contraintes sont d'autant plus importantes que le nombre de voies de réception augmente ce qui correspond à une tendance forte dans les évolutions à venir notamment en raison de l'apparition de traitements nécessitant l'exploitation d'une parte seulement des sous-réseaux antennaires et non du réseau antennaire complet.

Une solution au problème technique précité consiste à utiliser un dispositif de formation de voies dont la fonction de transfert est une matrice de routage reconfigurable systématique.

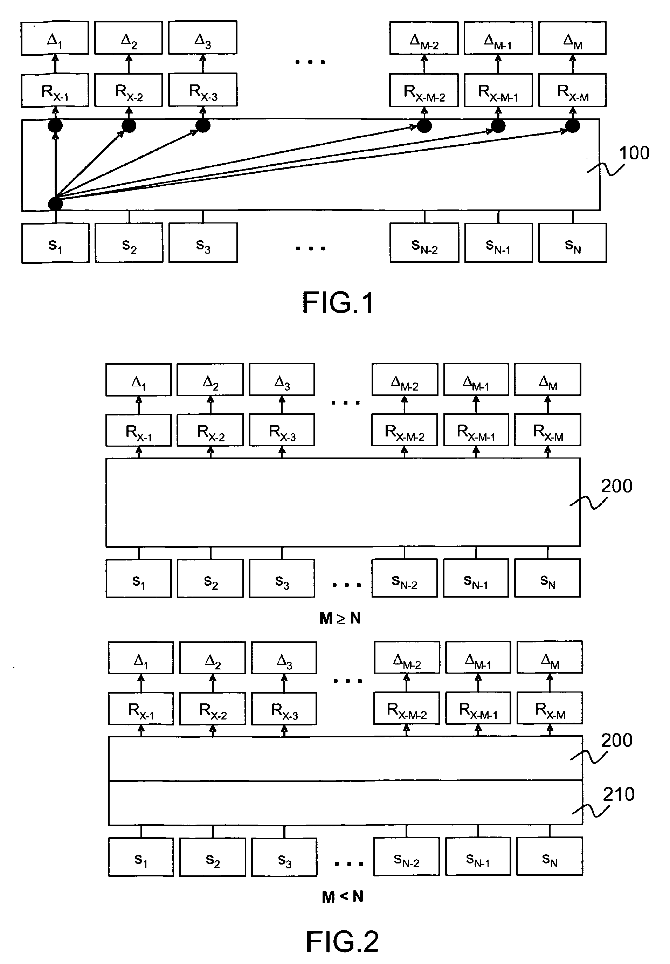

Un exemple d'un tel dispositif est schématisé à la figure 1. La matrice de routage 100 permet la transmission des signaux de sortie de chaque élément rayonnant $S_1,...S_N$ de l'antenne vers toutes les voies de réception $RX_1,...RX_M$ disponibles. Ainsi, à partir des signaux numérisés $\Delta_1,... \Delta_M$ en sortie des voies de réception, il est possible de récupérer l'information contenue dans tous les signaux analogiques $S_1,...S_N$ provenant des éléments rayonnants.

Une telle solution fonctionne lorsqu'un nombre donné de voies de réception est indisponible, cependant elle présente un coût important de mise en oeuvre du fait de sa totale reconfigurabilité. Un grand nombre de composants sont nécessaires à son implémentation alors même que le besoin associé ne nécessite pas forcément le routage de l'ensemble des signaux issus des éléments rayonnants vers l'ensemble des voies de réception existantes. Examples significatifs sont les documents US-A-5557603 et EP-A-2363917.

L'invention propose une solution alternative à la matrice reconfigurable de la figure 1, consistant en un formateur de voies pré-conditionné pour pallier aux indisponibilités d'un nombre K donné de voies de réception.

Le formateur de voies selon l'invention implémente, à l'aide de commutateurs et de sommateurs, une combinaison analogique des signaux d'antenne qui permet de garantir la condition d'indisponibilité précitée.

En outre l'invention permet de minimiser la complexité du dispositif et du nombre de composants utilisés et de maîtriser l'impact des indisponibilités.

L'invention a pour objet un formateur de voies pré-conditionné configurable pour réseau antennaire, comportant N entrées destinées à être connectées à N éléments antennaires et M sorties destinées à être connectées à M récepteurs, **caractérisé en ce qu'il** comprend des moyens adaptés pour router l'intégralité des signaux reçus par lesdits éléments antennaires vers au moins un récepteur disponible lorsqu'au plus un nombre K de récepteurs sont indisponibles, lesdits moyens étant adaptés à mettre en oeuvre la fonction de transfert matricielle A à N colonnes et M lignes définie de la façon suivante :

a) chaque colonne comprend K+1 coefficients dont la valeur est configurable à 0 ou à une valeur non nulle, les autres coefficients de chaque colonne étant fixés égaux à 0,
b) les K+1 coefficients configurables d'une colonne sont décalés d'une ligne par rapport aux K+1 coefficients configurables de la colonne située à sa gauche de sorte à former une matrice A dite « en escalier ».

Lorsque le nombre K de récepteurs indisponibles est strictement supérieur à la différence entre le nombre M de sorties et le nombre N d'entrées dudit formateur, la fonction de transfert matricielle A est modifiée de la façon suivante :

a) Sélectionner deux colonnes adjacentes correspondant à deux entrées dudit formateur à regrouper,
b) Effectuer une permutation circulaire d'une ligne vers le haut de toutes les colonnes situées à droite de la première colonne dudit regroupement,
c) Supprimer la dernière ligne de la matrice obtenue,

d) Répéter les étapes a),b),c) jusqu'à obtenir un nombre $K_1$ de regroupements d'entrées deux à deux, avec $K_1$=K-M+N

Les coefficients de la matrice A sont configurables et peuvent prendre la valeur 0 ou 1 et la somme des coefficients de chaque colonne est fixée égale à 1.

Selon un aspect particulier de l'invention, lesdits moyens adaptés à mettre en oeuvre la fonction de transfert matricielle A comprennent :

- pour chaque entrée dudit formateur, un commutateur relié à ladite entrée et comportant K+1 sorties,
- une pluralité d'additionneurs agencés entre les sorties des commutateurs et les sorties du formateur de voies de sorte à respecter la fonction de transfert A.

L'invention a également pour objet un réseau antennaire comprenant un nombre N d'éléments antennaires, un nombre M de récepteurs et un formateur de voies pré-conditionné configurable selon l'invention dont les entrées sont connectées auxdits éléments antennaires et les sorties sont connectées auxdits récepteurs.

Dans une variante de réalisation de l'invention, ledit réseau antennaire comprend en outre, lorsque le nombre M de récepteurs est strictement inférieur au nombre N d'éléments antennaires, un moyen de regroupement des sorties desdits éléments antennaires agencé entre les éléments antennaires et le formateur de voies de sorte à limiter le nombre d'entrées dudit formateur à un nombre au plus égal au nombre M de récepteurs.

Dans une autre variante de réalisation de l'invention, lesdits éléments antennaires sont agencés dans un plan selon quatre quadrants comportant chacun le même nombre d'éléments et un nombre $K_1$ de sous-réseaux est formé par appariement de deux éléments antennaires du même quadrant, de sorte à pouvoir résister à l'indisponibilité d'au plus K=M-N+ $K_1$ récepteurs.

Les sous-réseaux peuvent être choisis de sorte à maximiser la distance maximale entre les centres de phase équivalents du réseau antennaire obtenu après formation desdits sous-réseaux.

L'invention a également pour objet un procédé de conception d'un formateur de voies pré-conditionné configurable pour réseau antennaire, comportant N entrées destinées à être connectées à N éléments antennaires et M sorties destinées à être connectées à M récepteurs, ledit formateur de voies étant adapté à router l'intégralité des signaux reçus par lesdits éléments antennaires vers au moins un récepteur disponible lorsqu'au plus un nombre K de récepteurs sont indisponibles, ledit procédé de conception étant **caractérisé en ce qu'il** consiste à :

a) Construire la fonction de transfert matricielle A à N colonnes et M lignes du formateur de voies de la façon suivante :

i. chaque colonne de ladite matrice A comprend K+1 coefficients dont la valeur est configurable à 0 ou à une valeur non nulle, les autres coefficients de chaque colonne étant fixés égaux à 0,
ii. les K+1 coefficients configurables d'une colonne sont décalés d'une ligne par rapport aux K+1 coefficients configurables de la colonne située à sa gauche de sorte à former une matrice A dite « en escalier ».

b) A chaque entrée dudit formateur de voies, associer un commutateur à 1 entrée et K+1 sorties,
c) Ajouter une pluralité de sommateurs agencés entre les sorties des commutateurs et les sorties du formateur de voies de sorte à respecter la fonction de transfert matricielle A.

Lorsque le nombre K de récepteurs indisponibles est strictement supérieur à la différence entre le nombre M de sorties et le nombre N d'entrées dudit formateur, la fonction de transfert matricielle A est modifiée de la façon suivante :

a) Sélectionner deux colonnes adjacentes correspondant à deux entrées dudit formateur à regrouper,
b) Effectuer une permutation circulaire d'une ligne vers le haut de toutes les colonnes situées à droite de la première colonne dudit regroupement,
c) Supprimer la dernière ligne de la matrice obtenue,
d) Répéter les étapes a),b),c) jusqu'à obtenir un nombre $K_1$ de regroupements d'entrées deux à deux, avec $K_1$=K-M+N

L'invention a également pour objet un procédé de configuration d'un formateur de voies selon l'invention **caractérisé en ce que**, pour éviter le routage de signaux reçus par lesdits éléments antennaires vers un récepteur indisponible, ledit procédé consiste à :

a) Identifier le ou les récepteurs indisponibles,
b) Affecter à au plus un coefficient configurable par colonne de ladite matrice A une valeur non nulle s'il appartient à une ligne de la matrice correspondant à un récepteur disponible,
c) Affecter aux autres coefficients configurables une valeur nulle,

d) Contrôler les sorties desdits commutateurs de façon à respecter la fonction de transfert matricielle A configurée.

D'autres caractéristiques et avantages de la présente invention apparaîtront mieux à la lecture de la description qui suit en relation aux dessins annexés qui représentent :

- La figure 1, un schéma d'un dispositif de formation de voie à matrice reconfigurable systématique selon l'art antérieur,
- La figure 2, un schéma d'un dispositif de formation de voie pré-conditionné selon l'invention qui dépend du nombre de voies de réception et du nombre d'éléments antennaires de l'antenne,
- La figure 3, un exemple de fonction de transfert, représentée sous forme matricielle, du dispositif de formation de voie selon un premier mode de réalisation de l'invention,
- Les figures 4 et 5, deux exemples de réalisation du dispositif de formation de voie selon un premier mode de réalisation de l'invention,
- Les figures 6a,6b,6c, un exemple de construction de la fonction de transfert matricielle du dispositif de formation de voie selon un deuxième mode de réalisation de l'invention,
- Les figures 7 et 8, deux exemples de réalisation du dispositif de formation de voie selon un deuxième mode de réalisation de l'invention,
- Les figures 9a, 9b, 9c, 9d quatre exemples de regroupements de sous-réseaux pour le cas d'une antenne plan à quatre cadrans et 16 sous-réseaux,

L'invention a pour objet un formateur de voies pré-conditionné reconfigurable permettant de router les signaux provenant d'un nombre N d'éléments antennaires ou sous-réseaux vers un nombre M de voies de réception, appelées par la suite plus simplement récepteurs. L'invention vise à garantir la réception de l'ensemble des signaux par au moins un récepteur lorsqu'un nombre K de récepteurs sont indisponibles du fait d'une panne ou d'une utilisation réservée.

Suivant les valeurs de N et M, deux cas de figure sont à prendre en compte comme illustré à la figure 2.

Lorsque le nombre M de récepteurs $R_{X-1}, ... R_{X-M}$ est strictement inférieur au nombre N d'éléments antennaires, il convient d'insérer entre le formateur de voies 200 selon l'invention et les sorties des éléments antennaires, une matrice de regroupement 210 apte à effectuer des regroupements entre les sorties des éléments antennaires pour se ramener à un nombre d'entrées du formateur de voies 200 inférieur ou égal au nombre de récepteurs. Les entrées du formateur de voies 200 sont alors destinées à recevoir une combinaison de signaux délivrés par un sous-réseau antennaire.

Dans le cas où M est supérieur ou égal à N, le formateur de voies 200 selon l'invention peut être utilisé directement sans matrice de regroupement 210.

Pour garantir qu'aucun signal de sortie $S_1, S_2, S_3, .. S_N$ n'est perdu lorsque K récepteurs sont indisponibles, il faut que le formateur de voies 200 soit adapté à diriger n'importe quel signal vers Q=K+1 récepteurs distincts.

En effet, si Q < K+1, il existe au moins une configuration d'indisponibilité des récepteurs et un élément antennaire tel que celui-ci est relié aux Q récepteurs indisponibles.

En outre, si Q > K+1, le dispositif devient redondant ce qui entraine l'emploi inutile de composants potentiellement coûteux.

Le formateur de voies 200 peut être caractérisé par sa fonction de transfert matricielle A de taille MxN qui est telle que Δ=AxS, avec Δ un vecteur colonne de taille M dont les composantes sont les signaux $\Delta_1, ..., \Delta_M$, en sortie des récepteurs $R_{X-1}, ... R_{X-M}$ et S est un vecteur colonne de taille N dont les composantes sont les signaux $S_1, S_2, S_3, .. S_N$ de sortie des éléments antennaires. Ainsi, la relation suivante est respectée :

$$\forall\, i \in [1;M], \Delta_i = \sum_{j=1}^{N} a_{i,j}\, s_j$$

avec $a_{i,j}$ les coefficients de la matrice A.

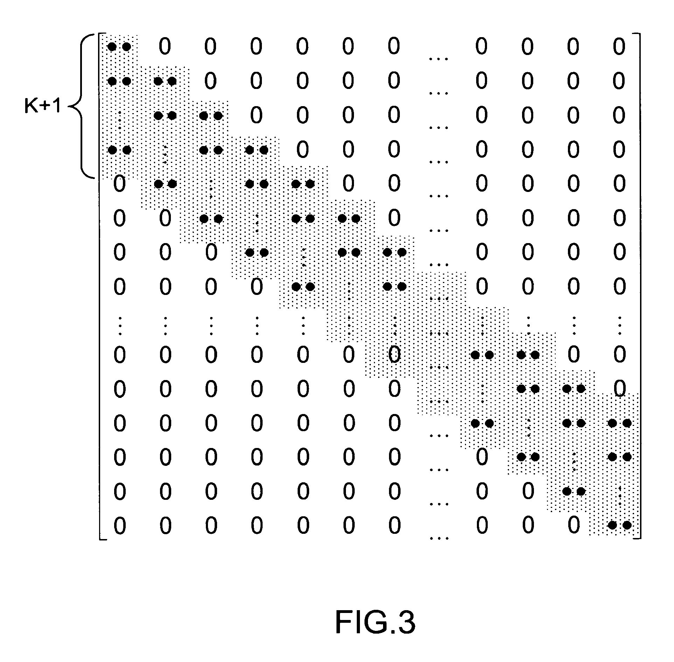

Pour respecter la contrainte de routage de l'ensemble des signaux même si K+1 récepteurs sont indisponibles et pour permettre de calculer individuellement les signaux de sortie des éléments antennaires ou des sous-réseaux, on montre que la matrice A doit avoir la forme représentée à la figure 3.

Chaque colonne de la matrice A contient K+1 coefficients qui peuvent être égaux à 0 ou à 1, selon l'emplacement des récepteurs indisponibles, les autres coefficients étant tous égaux à 0. En outre la somme des coefficients d'une colonne doit être égale à 1. Sur la figure 3, les coefficients potentiellement non nuls de la matrice sont représentés par des doubles points.

Une façon simple de concevoir la matrice A consiste à ranger les coefficients $a_{i,j}$ potentiellement non nuls en escalier comme illustré à la figure 3. Autrement dit, les K+1 coefficients potentiellement non nuls de chaque colonne sont décalés d'une ligne par rapport à la colonne de gauche.

Le terme potentiellement non nul est utilisé ici pour signifier que, selon la configuration choisie pour le dispositif formateur de voies, un seul des K+1 coefficients potentiellement non nuls est en fait pris égal à 1, les K coefficients restants étant pris égal à 0, sachant que le choix du coefficient pris égal à 1 (ou à une valeur non nulle différente de 1) dépend in fine de l'emplacement des K récepteurs indisponibles.

La configuration du dispositif sera explicitée plus en détail à l'appui d'exemples concrets dans la suite de la description.

Pour réaliser une matrice dite « en escalier » telle qu'illustrée à la figure 3, il est nécessaire que cette matrice comporte N+K lignes, autrement dit il est nécessaire que l'égalité M=N+K soit respectée. En effet, pour retrouver individuellement, en sortie de chaque récepteur, l'ensemble des signaux de sortie des éléments antennaires, il faut pouvoir résoudre le système Δ=AxS qui n'aura une solution unique que si M=N+K.

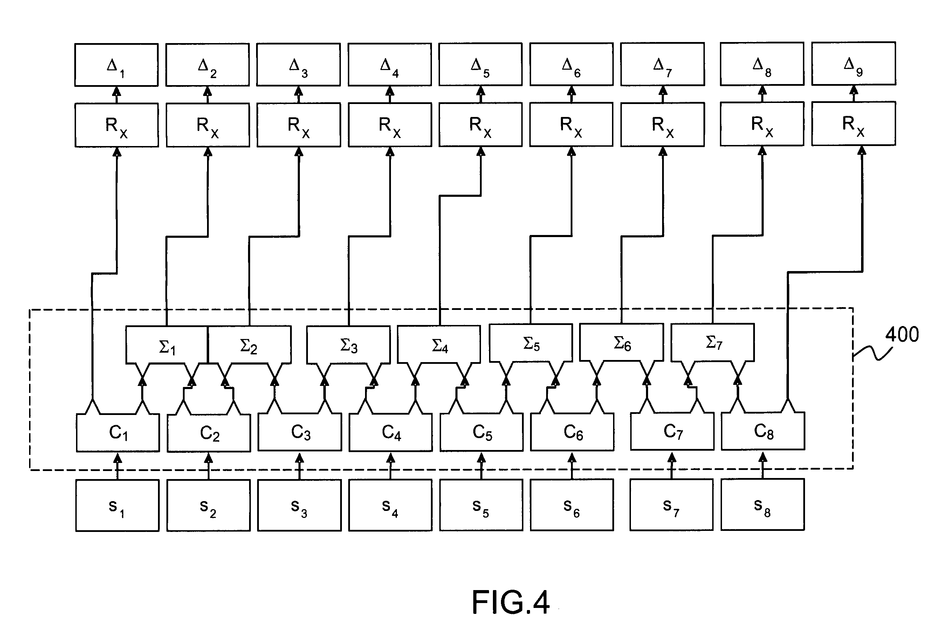

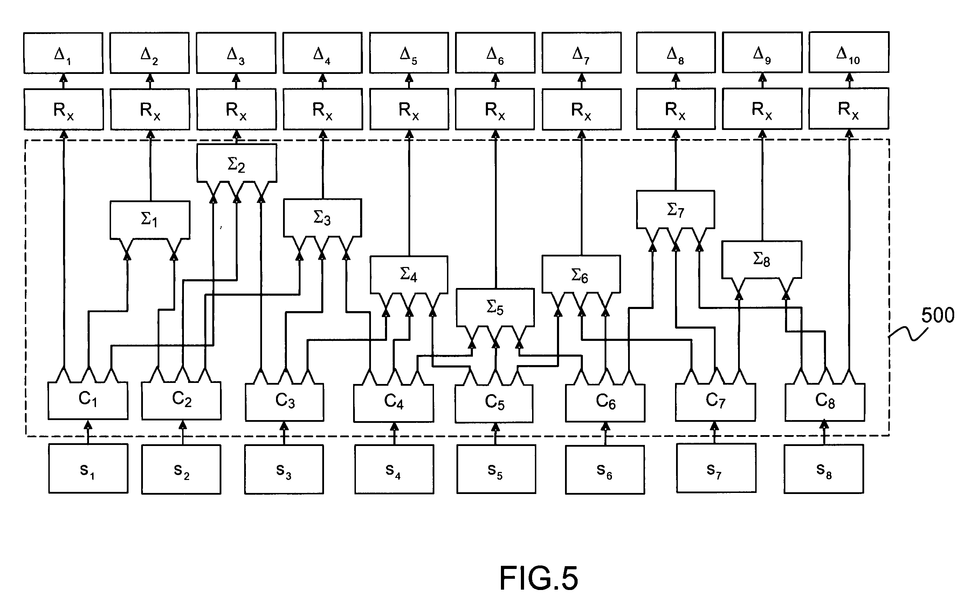

Les figures 4 et 5 décrivent à présent, sur deux exemples distincts pour lesquels l'égalité M=N+K est respectée, un exemple de conception du formateur de voies selon l'invention.

La figure 4 représente un schéma du formateur de voies 400 selon l'invention à 8 entrées, 9 sorties et supportant 1 indisponibilité quelconque parmi les 9 récepteurs auquel il est connecté.

La fonction de transfert matricielle du formateur de voies 400 est donnée par la matrice suivante :

$$A_{8,9,1}=\begin{bmatrix} a(1,1) & 0 & 0 & 0 & 0 & 0 & 0 & 0 \\ a(1,2) & a(2,2) & 0 & 0 & 0 & 0 & 0 & 0 \\ 0 & a(2,3) & a(3,3) & 0 & 0 & 0 & 0 & 0 \\ 0 & 0 & a(3,4) & a(4,4) & 0 & 0 & 0 & 0 \\ 0 & 0 & 0 & a(4,5) & a(5,5) & 0 & 0 & 0 \\ 0 & 0 & 0 & 0 & a(5,6) & a(6,6) & 0 & 0 \\ 0 & 0 & 0 & 0 & 0 & a(6,7) & a(7,7) & 0 \\ 0 & 0 & 0 & 0 & 0 & 0 & a(7,8) & a(8,8) \\ 0 & 0 & 0 & 0 & 0 & 0 & 0 & a(8,9) \end{bmatrix}$$

Les coefficients non nuls $a(i,j)$ d'une même colonne dépendent de la configuration du formateur de voies 400.

Pour réaliser la fonction de transfert matricielle $A_{8,9,1}$, le dispositif selon l'invention 400 est conçu de la façon représentée à la figure 4. Chaque entrée du dispositif est connectée à l'entrée d'un commutateur $C_1,... C_8$ à une entrée et deux sorties. Les deux sorties de chaque commutateur sont reliées soit directement à une sortie du dispositif 400, soit à l'une des deux entrées d'un additionneur $\Sigma_1,.. \Sigma_7$ à deux entrées et une sortie. Les sorties des additionneurs $\Sigma_1,... \Sigma_7$ sont reliées chacune à une sortie distincte du dispositif 400.

Autrement dit, les commutateurs et additionneurs que comporte le dispositif 400 selon l'invention sont agencés de sorte à respecter la fonction de transfert matricielle $A_{8,9,1}$.

Les commutateurs $C_1,... C_8$ sont aptes à diriger le signal reçu à leur entrée vers l'une de leur deux sorties au choix. Les additionneurs $\Sigma_1,.. \Sigma_7$ sont aptes à sommer les deux signaux reçus en entrée et à produire le résultat en sortie.

Le dispositif formateur de voies 400 selon l'invention ainsi conçu permet, lorsque les commutateurs $C_1,... C_8$ sont positionnés selon un jeu de positions prédéterminé mais reconfigurable, d'assurer le routage de chacun des signaux reçus en entrée vers une sortie associée à un récepteur $R_{x1},...R_{x9}$ disponible.

Le dispositif 400 est configuré à partir de la connaissance du récepteur indisponible parmi les 9 récepteurs présents auquel le dispositif 400 est destiné à être connecté. La configuration consiste à contrôler les commutateurs $C_1,... C_8$ de sorte à éviter le routage d'un des signaux d'entrée vers la sortie correspondant au récepteur non disponible.

Par exemple, dans le cas de la figure 4, si le récepteur indisponible est le récepteur $R_{x2}$, alors le commutateur $C_1$ est positionné de sorte à diriger son entrée vers sa 1ère sortie laquelle est destinée à être reliée au récepteur $R_{x1}$. Le commutateur $C_2$ est positionné de sorte à diriger son entrée vers sa 2ème sortie. Le signal $S_2$ reçu sur la 2ème entrée du dispositif 400 est alors acheminé, via l'additionneur $\Sigma_2$ jusqu'à la 3ème sortie du dispositif 400 destinée à être reliée au troisième récepteur $R_{x3}$. Les autres commutateurs $C_3, C_4, C_5, C_6, C_7, C_8$ sont positionnés de sorte à diriger leur entrée vers leur 2ème sortie et ainsi les signaux d'entrée $S_3, S_4, S_5, S_6, S_7, S_8$ sont orientés en direction des récepteurs disponibles $R_{x4}, R_{x5}, R_{x6}, R_{x7}, R_{x8}, R_{x9}$. Ainsi, le récepteur indisponible $R_{x2}$ est évité.

Le mode de configuration du dispositif décrit ci-dessous dans le cas où le récepteur $R_{x2}$ est indisponible correspond à la fonction de transfert matricielle suivante :

$$A_{8,9,1}=\begin{bmatrix}1&0&0&0&0&0&0&0\\0&0&0&0&0&0&0&0\\0&1&0&0&0&0&0&0\\0&0&1&0&0&0&0&0\\0&0&0&1&0&0&0&0\\0&0&0&0&1&0&0&0\\0&0&0&0&0&1&0&0\\0&0&0&0&0&0&1&0\\0&0&0&0&0&0&0&1\end{bmatrix}$$

De façon similaire, si le récepteur $R_{x6}$ est indisponible, la fonction de transfert matricielle du dispositif devient :

$$A_{8,9,1}=\begin{bmatrix}1&0&0&0&0&0&0&0\\0&1&0&0&0&0&0&0\\0&0&1&0&0&0&0&0\\0&0&0&1&0&0&0&0\\0&0&0&0&1&0&0&0\\0&0&0&0&0&0&0&0\\0&0&0&0&0&1&0&0\\0&0&0&0&0&0&1&0\\0&0&0&0&0&0&0&1\end{bmatrix}$$

L'utilisation de commutateurs permet ainsi de configurer le dispositif de formation de voies selon l'invention pour assurer le fonctionnement souhaité quel que soit le récepteur indisponible.

La figure 5 représente un autre exemple de formateur de voies 500 selon l'invention comprenant 8 entrées, 10 sorties et supportant 2 indisponibilités au plus parmi les 10 récepteurs auquel il est destiné à être connecté.

La fonction de transfert matricielle du formateur de voies 500 est donnée par la matrice suivante :

$$A_{8,10,2}=\begin{bmatrix}a(1,1)&0&0&0&0&0&0&0\\a(1,2)&a(2,2)&0&0&0&0&0&0\\a(1,3)&a(2,3)&a(3,3)&0&0&0&0&0\\0&a(2,4)&a(3,4)&a(4,4)&0&0&0&0\\0&0&a(3,5)&a(4,5)&a(5,5)&0&0&0\\0&0&0&a(4,6)&a(5,6)&a(6,6)&0&0\\0&0&0&0&a(5,7)&a(6,7)&a(7,7)&0\\0&0&0&0&0&a(6,8)&a(7,8)&a(8,8)\\0&0&0&0&0&0&a(7,9)&a(8,9)\\0&0&0&0&0&0&0&a(8,10)\end{bmatrix}$$

Les coefficients non nuls d'une même colonne dépendent de la configuration du formateur de voies 500.

Le dispositif 500 selon l'invention est conçu de la façon représentée à la figure 5. Chaque entrée du dispositif est connectée à l'entrée d'un commutateur $C_1,...C_8$ à une entrée et trois sorties. Les trois sorties de chaque commutateur sont reliées soit directement à une sortie du dispositif 500, soit à l'une des deux entrées d'un additionneur $\Sigma_1,..\Sigma_8$ à deux ou trois entrées et une sortie. Les sorties des additionneurs $\Sigma_1,..\Sigma_8$ sont reliées chacune à une sortie distincte du dispositif 500.

Les 8 commutateurs $C_1,...C_8$, les deux sommateurs à deux entrées $\Sigma_1,\Sigma_8$ et les 6 sommateurs à trois entrées $\Sigma_2,..\Sigma_7$, sont agencés de sorte à mettre en oeuvre la fonction de transfert matricielle $A_{8,10,2}$.

Le dispositif formateur de voies 500 selon l'invention ainsi conçu permet, lorsque les commutateurs $C_1,...C_8$ sont positionnés selon un jeu de positions prédéterminé, d'assurer le routage de chacun des signaux reçus en entrée vers une sortie associée à un récepteur $R_{x1},...R_{x10}$ disponible.

Le dispositif 500 est configuré à partir de la connaissance du récepteur ou des deux récepteurs indisponible(s) parmi les 10 récepteurs présents auquel le dispositif 500 est destiné à être connecté. La configuration consiste à positionner les commutateurs $C_1,... C_8$ de sorte à éviter le routage d'un des signaux d'entrée vers la sortie correspondant au(x) récepteur(s) non disponible(s).

Par exemple, si les récepteur $R_{x2}$ et $R_{x9}$ sont indisponibles, la fonction de transfert matricielle du dispositif est donnée par :

$$A_{8,10,2}=\begin{bmatrix} 1&0&0&0&0&0&0&0 \\ 0&0&0&0&0&0&0&0 \\ 0&1&0&0&0&0&0&0 \\ 0&0&1&0&0&0&0&0 \\ 0&0&0&1&0&0&0&0 \\ 0&0&0&0&1&0&0&0 \\ 0&0&0&0&0&1&0&0 \\ 0&0&0&0&0&0&1&0 \\ 0&0&0&0&0&0&0&0 \\ 0&0&0&0&0&0&0&1 \end{bmatrix}$$

De façon plus générale, le dispositif de formation de voies selon l'invention à N entrées, M sorties, compatible de K récepteurs indisponibles au plus et avec la contrainte M = N +K est conçu de la façon suivante.

La fonction de transfert matricielle $A_{N,M,K}$ du dispositif est construite de la façon expliquée précédemment. Le dispositif est ensuite conçu en associant à chacune de ses entrées, un commutateur à 1 entrée et K+1 sorties, puis en ajoutant en cascade des commutateurs, un ensemble d'additionneurs agencés de sorte à mettre en oeuvre ladite fonction de transfert.

Le dispositif une fois conçu est configuré, par le positionnement adéquat des commandes de commutation pour éviter le routage des signaux d'entrée vers les K récepteurs détectés comme étant indisponibles.

On décrit à présent un mode de réalisation supplémentaire de l'invention qui permet de résister à un nombre d'indisponibilités K strictement supérieur à M-N.

Lorsque la robustesse visée pour le dispositif correspond à un nombre de récepteurs indisponibles K strictement supérieur à la différence entre le nombre M de récepteurs et le nombre N d'éléments antennaires, il est nécessaire de regrouper les sorties de plusieurs éléments antennaires ensemble car le nombre de lignes N+K de la fonction de transfert matricielle du dispositif est alors strictement supérieur au nombre M de récepteurs, c'est-à-dire au nombre M de sorties du dispositif.

En posant $K_1$ un entier naturel strictement positif égal à K-M+N, il faut effectuer un nombre $K_1$ de regroupements deux à deux parmi les entrées du dispositif. Le choix de ces $K_1$ regroupements permet de maîtriser la dégradation de performance de l'ensemble antennaire associé au dispositif de cette invention et l'ensemble de réception. Les signaux reçus sur les entrées appariées seront indissociables car ils seront additionnés au sein du formateur de voies puis le résultat de cette addition sera routé vers une voie de réception disponible. Un tel appariement est nécessaire afin de garantir qu'aucun signal d'entrée n'est perdu malgré le nombre K de récepteurs indisponibles. Cette garantie est obtenue au prix d'une association deux à deux de certains signaux d'entrée.

Un tel regroupement est acceptable dans la mesure où la somme de l'ensemble des signaux de sortie des éléments antennaires peut toujours dans un tel cas être retrouvée à partir des sorties numérisées des voies de réception.

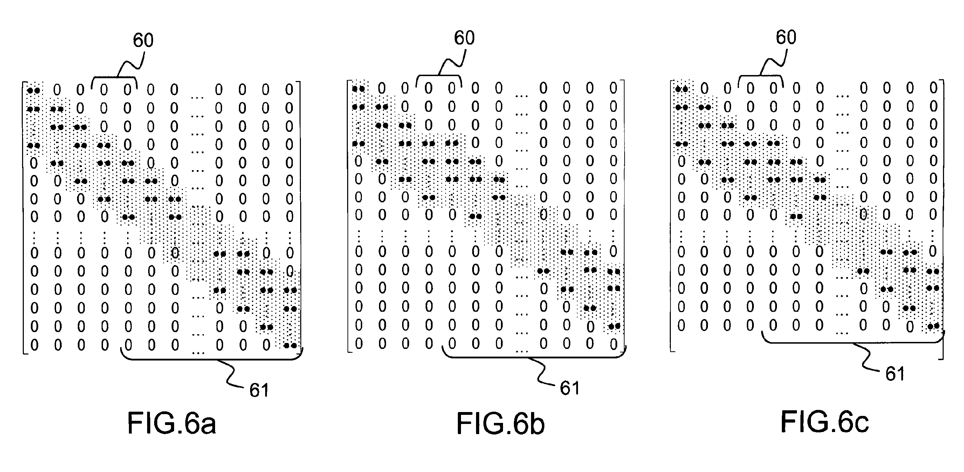

Les regroupements sont choisis par convention entre deux entrées adjacentes correspondant à deux éléments antennaires ou sous-réseaux adjacents. Il est toujours possible de renuméroter les entrées du dispositif pour se ramener à cette configuration. Cela revient à permuter les colonnes de la matrice de transfert A. Cette matrice peut être obtenue à partir de celle du dispositif résistant à K=M-N indisponibilités décrite précédemment à l'appui de la figure 3 en réalisant les transformations décrites ci - après et illustrées aux figures 6a, 6b et 6c.

A partir de la matrice dite « en escalier » décrite à la figure 6a, on sélectionne deux colonnes adjacentes 60 correspondant aux deux entrées du dispositif à regrouper. Toutes les colonnes 61 situées à droite de la première colonne du regroupement sont ensuite sélectionnées pour leur appliquer une permutation circulaire vers le haut, de façon à obtenir la matrice de la figure 6b. Enfin, la dernière ligne de la matrice obtenue est supprimée de sorte à arriver à la fonction de transfert matricielle de la figure 6c.

Les opérations décrites ci-dessus sont réitérées pour chaque regroupement. Au bout d'un nombre $K_1$ d'itérations, on obtient la matrice de transfert à M lignes et N colonnes permettant de concevoir un formateur de voies robuste à K indisponibilités avec $K_1$ appariements de couples d'entrées.

Comme déjà explicité ci-dessus, les coefficients de la matrice représentés par des doubles points ont pour valeur soit 0 soit une valeur non nulle selon la configuration choisie des commutateurs associés à chaque entrée.

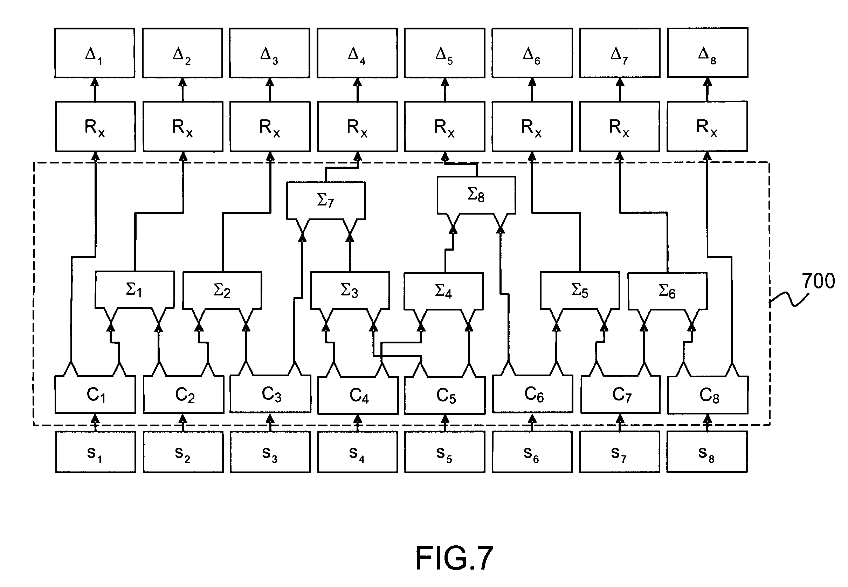

La figure 7 schématise un exemple de réalisation d'un dispositif de formation de voies 700 selon l'invention comportant 8 entrées, 8 sorties et adapté à supporter 1 indisponibilité.

La fonction de transfert matricielle du formateur de voies 700 est donnée par la matrice suivante :

$$A_{8,8,1}=\begin{bmatrix} a(1,1) & 0 & 0 & 0 & 0 & 0 & 0 & 0 \\ a(1,2) & a(2,2) & 0 & 0 & 0 & 0 & 0 & 0 \\ 0 & a(2,3) & a(3,3) & 0 & 0 & 0 & 0 & 0 \\ 0 & 0 & a(3,4) & a(4,4) & a(5,4) & 0 & 0 & 0 \\ 0 & 0 & 0 & a(4,5) & a(5,5) & a(6,5) & 0 & 0 \\ 0 & 0 & 0 & 0 & 0 & a(6,6) & a(7,6) & 0 \\ 0 & 0 & 0 & 0 & 0 & 0 & a(7,7) & a(8,7) \\ 0 & 0 & 0 & 0 & 0 & 0 & 0 & a(8,8) \end{bmatrix}$$

Les colonnes 4 et 5 de la matrice ne sont pas indépendantes et traduisent le regroupement choisi des entrées 4 et 5 du dispositif.

Les coefficients non nuls d'une même colonne dépendent de la configuration du formateur de voies 700.

Le formateur de voies 700 est conçu à partir de sa matrice de transfert $A_{8,8,1}$, de façon analogue aux exemples déjà décrits aux figures 4 et 5.

Les commutateurs et additionneurs que comporte le dispositif 700 selon l'invention sont agencés de sorte à respecter la fonction de transfert matricielle $A_{8,8,1}$.

Le dispositif formateur de voies 700 selon l'invention ainsi conçu permet, lorsque les commutateurs $C_1,... C_8$ sont positionnés selon un jeu de positions prédéterminé, d'assurer le routage de chacun des signaux reçus en entrée vers une sortie associée à un récepteur $R_{x1},...R_{x8}$ disponible même si un récepteur parmi ceux-ci est indisponible.

Par exemple, si le récepteur $R_{x2}$ est indisponible, la matrice de transfert est configurée de la façon suivante :

$$A_{8,8,1}=\begin{bmatrix} 1 & 0 & 0 & 0 & 0 & 0 & 0 & 0 \\ 0 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 1 & 0 & 0 & 0 \\ 0 & 0 & 0 & 0 & 0 & 1 & 0 & 0 \\ 0 & 0 & 0 & 0 & 0 & 0 & 1 & 0 \\ 0 & 0 & 0 & 0 & 0 & 0 & 0 & 1 \end{bmatrix}$$

On voit que dans ce cas, le récepteur $R_{x5}$ reçoit la somme des signaux $S_4$ et $S_5$ qui sont indissociables.

Dans le cas où aucun récepteur n'est indisponible, la conception configurable du formateur de voie 700 permet de positionner les commutateurs d'entrée de sorte à dissocier les signaux $S_4$ et $S_5$. La matrice de transfert est dans ce cas égale à la matrice identité.

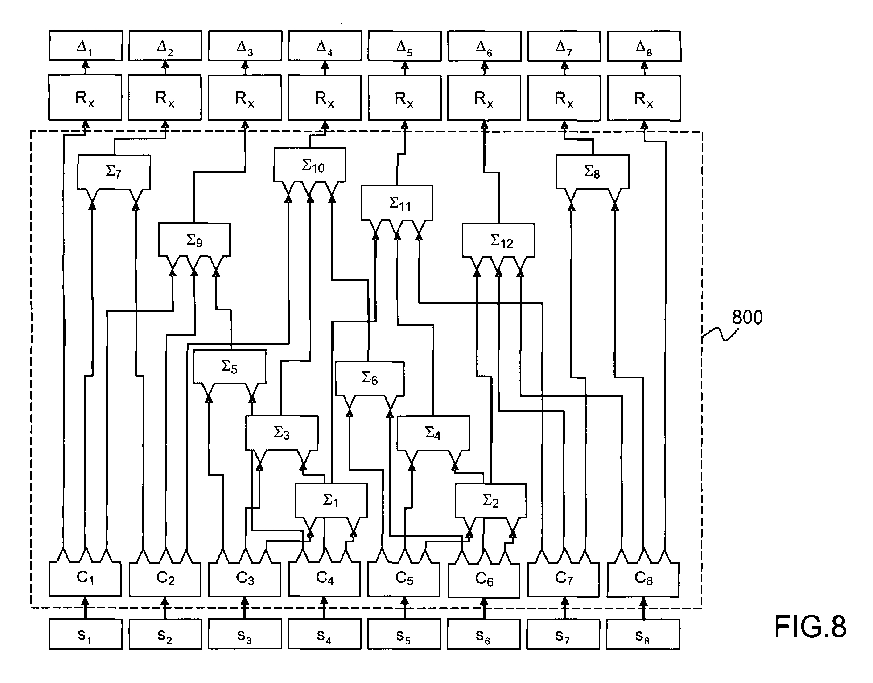

La figure 8 schématise un autre exemple de réalisation d'un dispositif de formation de voies 800 selon l'invention comportant 8 entrées, 8 sorties et adapté à supporter 2 indisponibilités.

Les entrées n°3 et 4 d'une part et 5 et 6 d'autre part sont appariées.

La fonction de transfert matricielle du formateur de voies 800 est donnée par la matrice suivante :

$$A_{8,8,2}=\begin{bmatrix} a(1,1) & 0 & 0 & 0 & 0 & 0 & 0 & 0 \\ a(1,2) & a(2,2) & 0 & 0 & 0 & 0 & 0 & 0 \\ a(1,3) & a(2,3) & a(3,3) & a(4,3) & 0 & 0 & 0 & 0 \\ 0 & a(2,4) & a(3,4) & a(4,4) & a(5,4) & a(6,4) & 0 & 0 \\ 0 & 0 & a(3,5) & a(4,5) & a(5,5) & a(6,5) & a(7,5) & 0 \\ 0 & 0 & 0 & 0 & a(5,6) & a(6,6) & a(7,6) & a(8,6) \\ 0 & 0 & 0 & 0 & 0 & 0 & a(7,7) & a(8,7) \\ 0 & 0 & 0 & 0 & 0 & 0 & 0 & a(8,8) \end{bmatrix}$$

Le dispositif 800 est implémenté en utilisant 8 commutateurs $C_1,... C_8$ à 3 sorties, 8 additionneurs $\Sigma_1,.. \Sigma_8$, à deux entrées et 4 additionneurs à trois entrées $\Sigma_9,.. \Sigma_{12}$.

Le choix des regroupements effectués entre les entrées du formateur de voies selon l'invention découle d'un choix de regroupement des éléments antennaires ou sous-réseaux de l'antenne.

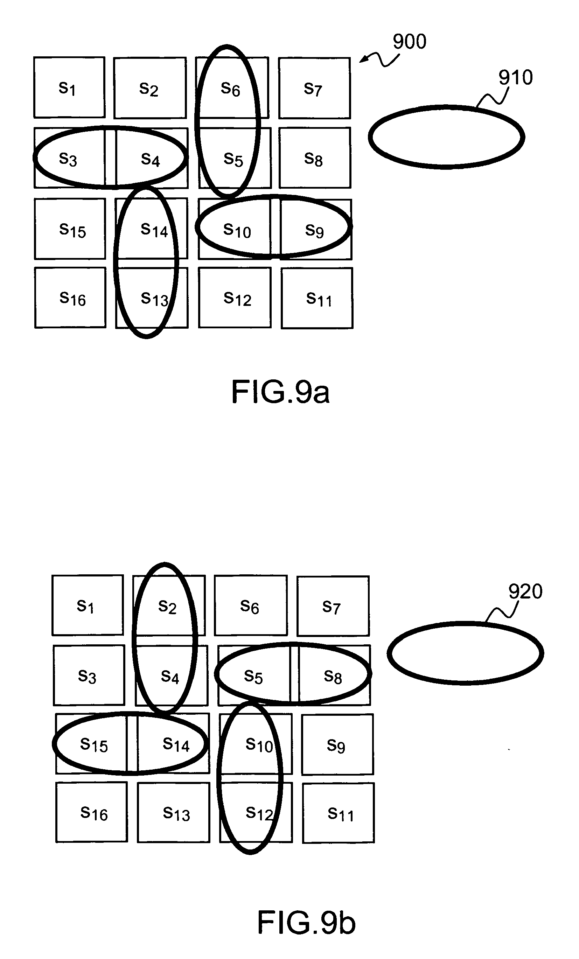

La figure 9a illustre un exemple d'antenne deux plans 900 composée de 16 sous-réseaux antennaires $S_1,...S_{16}$ agencés sur quatre quadrants. Le formateur de voies associé à cette antenne est conçu, selon l'invention, pour résister à une indisponibilité d'un quart des 16 voies de réception. Ainsi, il est nécessaire d'effectuer quatre regroupements par paire. Deux critères sont utilisés pour définir les regroupements à réaliser.

Premièrement, pour une antenne deux plans 900 composée de quatre quadrants, il est souhaitable d'apparier deux sous-réseaux du même quadrant afin de maintenir les fonctions d'écartométrie entre chacun des quadrants.

Deuxièmement, un critère de maximisation des distances entre centres de phase des différents éléments antennaires est également appliqué. Pour chaque configuration de regroupements possible, en tenant compte du premier critère ci-dessus, on définit les centres de phases équivalents des regroupements antennaires. Autrement dit, pour un regroupement de deux éléments antennaires, le centre de phase équivalent du sous-réseau constitué des deux éléments est situé au milieu du segment reliant les centres de phase des deux éléments. On obtient alors un nouveau réseau antennaire « virtuel » composé de 12 éléments antennaires ou sous réseaux. On calcule ensuite l'ensemble des distances entre les centres de phase des 12 éléments et on retient la distance maximale parmi cet ensemble.

Ce calcul est réalisé pour toutes les configurations de regroupement possibles. La configuration retenue est celle pour laquelle la distance maximale calculée est la plus grande.

Par application des deux critères précités, on obtient, pour l'exemple de la figure 9a, la configuration de regroupement 910 qui consiste à associer par paires les éléments antennaires $S_3$ et $S_4$, $S_5$ et $S_6$, $S_9$ et $S_{10}$, $S_{13}$ et $S_{14}$. De cette façon, la distance maximale entre centres de phase est celle obtenue en reliant les centres de phases des éléments antennaires $S_1$ et $S_{11}$ ou $S_7$ et $S_{16}$.

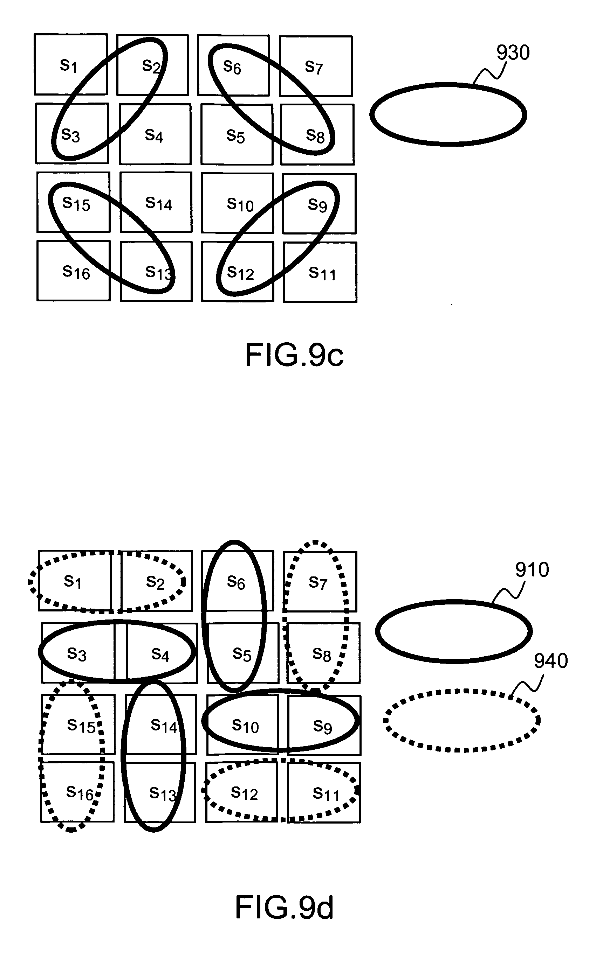

D'autres regroupements 920,930 sont possibles, illustrés aux figures 9b et 9c, permettant d'obtenir le même résultat.

La figure 9d illustre, pour le même exemple que celui de la figure 9a, un deuxième niveau de regroupements 940 des éléments antennaires restants, dans le cas où le dispositif conçu vise à résister à l'indisponibilité de la moitié des 16 récepteurs.

L'exemple d'une antenne deux plans comportant quatre quadrants chacun composé de quatre éléments antennaires peut s'étendre à un cas plus général ou chaque quadrant est composé d'un nombre quelconque d'éléments antennaires supérieur à quatre.

L'invention a été décrite sur la base d'exemples qui utilisent tous une matrice de transfert comportant des coefficients soit nuls soit égaux à 1. Sans sortir du cadre de l'invention, les coefficients non nuls peuvent prendre une valeur différente de 1 lorsqu'on souhaite, par exemple, effectuer un rééquilibrage particulier entre différentes voies de réception.

## Revendications

1. Formateur de voies (200,400,600,700,800) pré-conditionné configurable pour réseau antennaire, comportant N entrées destinées à être connectées à N éléments antennaires et M sorties destinées à être connectées à M récepteurs ($Rx_i$), **caractérisé en ce qu'il** comprend des moyens adaptés pour router l'intégralité des signaux ($S_j$) reçus par lesdits éléments antennaires vers au moins un récepteur ($Rx_i$) disponible lorsqu'au plus un nombre K de récepteurs sont indisponibles, lesdits moyens étant configurés pour mettre en oeuvre la fonction de transfert matricielle A à N colonnes et M lignes définie de la façon suivante :

a) chaque colonne comprend K+1 coefficients dont la valeur est configurable à 0 ou à une valeur non nulle, les autres coefficients de chaque colonne étant fixés égaux à 0,

b) les K+1 coefficients configurables d'une colonne sont décalés d'une ligne par rapport aux K+1 coefficients configurables de la colonne située à sa gauche de sorte à former une matrice A dite « en escalier ».

2. Formateur de voies selon la revendication 1 dans lequel, lorsque le nombre K de récepteurs indisponibles est strictement supérieur à la différence entre le nombre M de sorties et le nombre N d'entrées dudit formateur, la fonction de transfert matricielle A est modifiée de la façon suivante :

a) Sélectionner deux colonnes adjacentes (60) correspondant à deux entrées dudit formateur à regrouper,

b) Effectuer une permutation circulaire d'une ligne vers le haut de toutes les colonnes (61) situées à droite de la première colonne dudit regroupement (60),

c) Supprimer la dernière ligne de la matrice obtenue,

d) Répéter les étapes a),b),c) jusqu'à obtenir un nombre $K_1$ de regroupements d'entrées deux à deux, avec $K_1 = K-M+N$

3. Formateur de voies selon l'une des revendications 1 ou 2 dans lequel lesdits coefficients configurables de la matrice A peuvent prendre la valeur 0 ou 1 et la somme des coefficients de chaque colonne est fixée égale à 1.

4. Formateur de voies selon l'une des revendications précédentes dans lequel lesdits moyens adaptés à mettre en oeuvre la fonction de transfert matricielle A comprennent :

- pour chaque entrée dudit formateur, un commutateur ($C_i$) relié à ladite entrée et comportant K+1 sorties,
- une pluralité d'additionneurs ($\Sigma_i$) agencés entre les sorties des commutateurs ($C_i$) et les sorties du formateur de voies de sorte à respecter la fonction de transfert A.

5. Réseau antennaire comprenant un nombre N d'éléments antennaires, un nombre M de récepteurs et un formateur de voies (200,400,600,700,800) pré-conditionné configurable selon l'une des revendications 1 à 4 dont les entrées sont connectées auxdits éléments antennaires et les sorties sont connectées auxdits récepteurs.

6. Réseau antennaire selon la revendication 5 comprenant en outre, lorsque le nombre M de récepteurs est strictement inférieur au nombre N d'éléments antennaires, un moyen (210) de regroupement des sorties desdits éléments antennaires agencé entre les éléments antennaires et le formateur de voies (200) de sorte à limiter le nombre d'entrées dudit formateur à un nombre au plus égal au nombre M de récepteurs.

7. Réseau antennaire selon la revendication 5 dans lequel lesdits éléments antennaires sont agencés dans un plan selon quatre quadrants comportant chacun le même nombre d'éléments et un nombre $K_1$ de sous-réseaux est formé par appariement de deux éléments antennaires du même quadrant, de sorte à pouvoir résister à l'indisponibilité d'au plus $K=M-N+K_1$ récepteurs.

8. Réseau antennaire selon la revendication 7 dans lequel les sous-réseaux sont choisis de sorte à maximiser la distance maximale entre les centres de phase équivalents du réseau antennaire obtenu après formation desdits sous-réseaux.

9. Procédé de conception d'un formateur de voies (200,400,600,700,800) pré-conditionné configurable pour réseau antennaire, comportant N entrées destinées à être connectées à N éléments antennaires et M sorties destinées à être connectées à M récepteurs ($Rx_i$), ledit formateur de voies étant adapté à router l'intégralité des signaux ($S_j$) reçus par lesdits éléments antennaires vers au moins un récepteur ($Rx_i$) disponible lorsqu'au plus un nombre K de récepteurs sont indisponibles, ledit procédé de conception étant **caractérisé en ce qu'il** consiste à :

a) Construire la fonction de transfert matricielle A à N colonnes et M lignes du formateur de voies de la façon suivante :

i. chaque colonne de ladite matrice A comprend K+1 coefficients dont la valeur est configurable à 0 ou à une valeur non nulle, les autres coefficients de chaque colonne étant fixés égaux à 0,

ii. les K+1 coefficients configurables d'une colonne sont décalés d'une ligne par rapport aux K+1 coefficients configurables de la colonne située à sa gauche de sorte à former une matrice A dite « en escalier ».

b) A chaque entrée dudit formateur de voies, associer un commutateur ($C_i$) à 1 entrée et K+1 sorties,

c) Ajouter une pluralité de sommateurs ($\Sigma_i$) agencés entre les sorties des commutateurs ($C_i$) et les sorties du formateur de voies de sorte à respecter la fonction de transfert matricielle A.

**10.** Procédé de conception d'un formateur de voies selon la revendication 9 dans lequel, lorsque le nombre K de récepteurs indisponibles est strictement supérieur à la différence entre le nombre M de sorties et le nombre N d'entrées dudit formateur, la fonction de transfert matricielle A est modifiée de la façon suivante :

a) Sélectionner deux colonnes adjacentes (60) correspondant à deux entrées dudit formateur à regrouper,

b) Effectuer une permutation circulaire d'une ligne vers le haut de toutes les colonnes (61) situées à droite de la première colonne dudit regroupement (60),

c) Supprimer la dernière ligne de la matrice obtenue,

d) Répéter les étapes a),b),c) jusqu'à obtenir un nombre $K_1$ de regroupements d'entrées deux à deux, avec $K_1$=K-M+N

**11.** Procédé de conception d'un formateur de voies selon l'une des revendications 9 ou 10 dans lequel lesdits coefficients configurables de la matrice A peuvent prendre la valeur 0 ou 1 et la somme des coefficients de chaque colonne est fixée égale à 1.

**12.** Procédé de configuration d'un formateur de voies selon l'une des revendications 1 à 4 **caractérisé en ce que,** pour éviter le routage de signaux ($S_j$) reçus par lesdits éléments antennaires vers un récepteur ($Rx_i$) indisponible, ledit procédé consiste à :

a) Identifier le ou les récepteurs ($Rx_i$) indisponibles,

b) Affecter à au plus un coefficient configurable par colonne de ladite matrice A une valeur non nulle s'il appartient à une ligne de la matrice correspondant à un récepteur ($Rx_i$) disponible,

c) Affecter aux autres coefficients configurables une valeur nulle,

d) Contrôler les sorties desdits commutateurs ($C_i$) de façon à respecter la fonction de transfert matricielle A configurée.

**Patentansprüche**

**1.** Präkonditionierter, für ein Antennennetz konfigurierbarer Signalwegformer (200, 400, 600, 700, 800) mit N Eingängen, die zur Verbindung mit N Antennenelementen bestimmt sind, und M Ausgängen, die zur Verbindung mit M Empfängern ($Rx_i$) bestimmt sind, **dadurch gekennzeichnet, dass** er Mittel umfasst, die angepasst sind, um die Gesamtheit der von den Antennenelementen empfangenen Signale ($S_j$) zu mindestens einem Empfänger ($Rx_i$) zu routen, der verfügbar ist, wenn höchsten eine Anzahl K von Empfängern nicht verfügbar ist, wobei die Mittel konfiguriert sind, um die Matrixtransferfunktion A auf N Spalten und M Zeilen anzuwenden, die folgendermaßen definiert ist:

a) jede Spalte umfasst K+1 Koeffizienten, deren Wert auf 0 oder auf einen Wert ungleich Null konfigurierbar ist, wobei die anderen Koeffizienten jeder Spalte auf gleich 0 festgelegt sind,

b) die K+1 konfigurierbaren Koeffizienten einer Spalte werden im Verhältnis zu K+1 konfigurierbaren Koeffizienten der Spalte, die sich links von ihr befindet, um eine Zeile derart versetzt, dass eine so genannte "Stufen"-Matrix A gebildet wird.

**2.** Signalwegformer nach Anspruch 1, wobei, wenn die Anzahl K von nicht verfügbaren Empfängern strikt höher ist als die Differenz zwischen der Anzahl M von Ausgängen und der Anzahl N von Eingängen des Formers, die Matrixtransferfunktion A folgendermaßen geändert wird:

a) Auswählen von zwei benachbarten Spalten (60), die zwei zu gruppierenden Eingängen des Formers entsprechen,

b) Durchführen einer zyklischen Permutation einer Zeile nach oben aller Spalten (61), die sich rechts von der ersten Spalte der Gruppierung (60) befinden,

c) Entfernen der letzten Zeile der erhaltenen Matrix,

d) Wiederholen der Schritte a), b), c) bis zum Erhalt einer Anzahl $K_1$ paarweiser Eingangsgruppierungen mit $K_1$=K-M+N.

**3.** Signalwegformer nach einem der Ansprüche 1 oder 2, wobei die konfigurierbaren Koeffizienten der Matrix A den Wert 0 oder 1 annehmen können und die Summe der Koeffizienten jeder Spalte auf gleich 1 festgelegt ist.

**4.** Signalwegformer nach einem der vorangehenden Ansprüche, wobei die Mittel zur Umsetzung der Matrixtransferfunktion A angepasst sind, umfassen:

- für jeden Eingang des Formers einen Umschalter ($C_i$), der mit dem Eingang verbunden ist und K+1 Ausgänge aufweist,
- eine Vielzahl von Addierern ($\Sigma_i$), die zwischen den Ausgängen der Umschalter ($C_i$) und den Ausgängen des Signalwegformers derart angeordnet sind, dass die Transferfunktion A respektiert ist.

**5.** Antennennetz, das eine Anzahl N von Antennenelementen, eine Anzahl M von Empfängern und einen präkonditionierten, nach einem der Ansprüche 1 bis 4 konfigurierbaren Signalwegformer (200, 400, 600, 700, 800) umfasst, dessen Eingänge mit den Antennenelementen verbunden sind und dessen Ausgänge mit den Empfängern verbunden sind.

**6.** Antennennetz nach Anspruch 5, das ferner, wenn die Anzahl M von Empfängern strikt kleiner ist als die Anzahl N von Antennenelementen, ein Gruppierungsmittel (210) der Ausgänge der Antennenelemente umfasst, das zwischen den Antennenelementen und dem Signalwegformer (200) derart ausgebildet ist, dass die Anzahl der Eingänge des Formers auf eine Anzahl begrenzt wird, die höchsten gleich der Anzahl M von Empfängern ist.

**7.** Antennennetz nach Anspruch 5, wobei die Antennenelemente in einer Ebene gemäß vier Quadranten ausgebildet sind, die jeweils dieselbe Anzahl von Elementen aufweisen und eine Anzahl $K_1$ von Unternetzen durch Pairing von zwei Antennenelementen desselben Quadranten derart gebildet wird, um der Nichtverfügbarkeit von höchstens $K=M-N+K_1$ Empfängern widerstehen zu können.

**8.** Antennennetz nach Anspruch 7, wobei die Unternetze derart ausgewählt sind, dass der maximale Abstand zwischen den äquivalenten Phasenzentren des nach Bildung der Unternetze entstandenen Antennennetzes maximiert wird.

**9.** Konzeptionsverfahren eines vorkonditionierten, für ein Antennennetz konfigurierbaren Signalwegformers (200, 400, 600, 700, 800) mit N Eingängen, die zur Verbindung mit N Antennenelementen bestimmt sind, und M Ausgängen, die zur Verbindung mit M Empfängern ($Rx_i$) bestimmt sind, wobei der Signalwegformer angepasst ist, um die Gesamtheit der von den Antennenelementen empfangenen Signale ($S_j$) zu mindestens einem Empfänger ($Rx_i$) zu routen, der verfügbar ist, wenn höchsten eine Anzahl K von Empfängern nicht verfügbar ist, wobei das Konzeptionsverfahren **dadurch gekennzeichnet ist, dass** es darin besteht:

a) Konstruieren der Matrixtransferfunktion A mit N Spalten und M Zeilen des Signalwegformers auf folgende Weise:

i) jede Spalte der Matrix A umfasst K+1 Koeffizienten, deren Wert auf 0 oder auf einen Wert ungleich Null konfigurierbar ist, wobei die anderen Koeffizienten jeder Spalte auf gleich 0 festgelegt sind,
ii) die K+1 konfigurierbaren Koeffizienten einer Spalte werden im Verhältnis zu K+1 konfigurierbaren Koeffizienten der Spalte, die sich links von ihr befindet, derart um eine Zeile versetzt, dass eine so genannte "Stufen"-Matrix A gebildet wird,

b) Zuordnen zu jedem Eingang des Signalwegformers eines Umschalters ($C_i$) mit 1 Eingang und K+1 Ausgängen,
c) Hinzufügen einer Vielzahl von Addierern ($\Sigma_i$), die zwischen den Ausgängen der Umschalter ($C_i$) und den Ausgängen des Signalwegformers derart angeordnet sind, dass die Matrixtransferfunktion A respektiert ist.

**10.** Konzeptionsverfahren eines Signalwegformers nach Anspruch 9, wobei, wenn die Anzahl K von nicht verfügbaren Empfängern strikt höher ist als die Differenz zwischen der Anzahl M von Ausgängen und der Anzahl N von Eingängen des Formers, die Matrixtransferfunktion A folgendermaßen geändert wird:

a) Auswählen von zwei benachbarten Spalten (60), die zwei zu gruppierenden Eingängen des Formers entsprechen,
b) Durchführen einer zyklischen Permutation einer Zeile nach oben aller Spalten (61), die sich rechts von der ersten Spalte der Gruppierung (60) befinden,
c) Entfernen der letzten Zeile der erhaltenen Matrix,

d) Wiederholen der Schritte a), b), c) bis zum Erhalt einer Anzahl $K_1$ paarweiser Eingangsgruppierungen mit $K_1$=K-M+N.

11. Konzeptionsverfahren eines Signalwegformers nach einem der Ansprüche 9 oder 10, wobei die konfigurierbaren Koeffizienten der Matrix A den Wert 0 oder 1 annehmen können und die Summe der Koeffizienten jeder Spalte auf gleich 1 festgelegt ist.

12. Konfigurationsverfahren eines Signalwegformers nach einem der Ansprüche 1 bis 4, **dadurch gekennzeichnet, dass**, um das Routing von von den Antennenelementen empfangenen Signalen ($S_j$) zu einem nicht verfügbaren Empfänger ($Rx_i$) zu vermeiden, das Verfahren darin besteht:

a) Identifizieren des oder der nicht verfügbaren Empfänger ($Rx_i$),
b) Zuweisen an höchstens einen konfigurierbaren Koeffizienten je Spalte der Matrix A eines Werts ungleich Null, wenn er zu einer Zeile der Matrix gehört, die einem verfügbaren Empfänger ($Rx_i$) entspricht,
c) Zuweisen eines Werts Null an die anderen konfigurierbaren Koeffizienten,
d) Kontrollieren der Ausgänge der Umschalter ($C_i$) derart, dass die konfigurierte Matrixtransferfunktion A respektiert ist.

## Claims

1. A configurable preconditioned channel former (200, 400, 600, 700, 800) for an antenna array, comprising N inputs designed to be connected to N antenna elements and M outputs designed to be connected to M receivers ($Rx_i$), **characterised in that** it comprises means designed to route all of the signals ($Sj$) received by said antenna elements toward at least one receiver ($Rx_i$) available when at most a number K of receivers is unavailable, said means being configured to implement the transfer function matrix A to N columns and M lines defined as follows:

a) each column comprises K+1 coefficients, the value of which can be configured to 0 or to a non-zero value, the other coefficients of each column being set to 0;
b) the K+1 configurable coefficients of a column are offset by a line relative to the K+1 configurable coefficients of the column located to its left so as to form a matrix A, referred to as "stepped" matrix.

2. The channel former according to claim 1, wherein, when the number K of unavailable receivers is strictly greater than the difference between the number M of outputs and the number N of inputs of said former, the transfer function matrix A is modified as follows by:

a) selecting two adjacent columns (60) corresponding to two inputs of said former to be grouped;
b) carrying out a circular permutation of a line toward the top of all of the columns (61) located to the right of the first column of said group (60);
c) deleting the last line of the obtained Matrix;
d) repeating steps a), b) and c) until a number $K_1$ of pairwise groups of inputs is obtained, with $K_1$=K-M+N.

3. The channel former according to claim 1 or 2, wherein said configurable coefficients of the matrix A can assume a value of 0 or 1 and the sum of the coefficients of each column is set to 1.

4. The channel former according to any one of the preceding claims, wherein said means designed to implement the transfer function matrix A comprises:

- a switch ($C_i$), for each input of said former, connected to said input and comprising K+1 outputs;
- a plurality of adders ($\sum_i$) arranged between the outputs of said switches ($C_i$) and the outputs of said channel former so as to comply with the transfer function A.

5. An antenna array comprising a number N of antenna elements, a number M of receivers and a configurable preconditioned channel former (200, 400, 600, 700, 800) according to any one of claims 1 to 4, the inputs of which are connected to said antenna elements and the outputs of which are connected to said receivers.

6. The antenna array according to claim 5, further comprising, when the number M of receivers is strictly less than the number N of antenna elements, a means (210) for grouping outputs of said antenna elements arranged between said antenna elements and said channel former (200) so as to limit the number of inputs of said former to a number that is at most equal to the number M of receivers.

7. The antenna array according to claim 5, wherein said antenna elements are arranged in a plane along four quadrants each comprising the same number of elements and a number $K_1$ of sub-arrays is formed by matching two antenna elements of the same quadrant so as to be able to overcome the unavailability of at most $K=M-N+K_1$ receivers.

8. The antenna array according to claim 7, wherein said sub-arrays are selected so as to maximise the maximum distance between the equivalent phase centres of said antenna array obtained after the formation of said sub-arrays.

9. A method for designing a configurable preconditioned channel former (200, 400, 600, 700, 800) for an antenna array, comprising N inputs designed to be connected to N antenna elements and M outputs designed to be connected to M receivers ($Rx_i$), said channel former being designed to route all of the signals ($S_j$) received by said antenna elements toward at least one receiver ($Rx_i$) available when at most a number K of receivers is unavailable, said design method being **characterised in that** it comprises:

   a) constructing the transfer function matrix A with N columns and M lines of said channel former as follows:

   i) each column of said matrix A comprises K+1 coefficients, the value of which can be configured to 0 or to a non-zero value, the other coefficients of each column being set to 0;
   ii) the K+1 configurable coefficients of a column are offset by a line relative to the K+1 configurable coefficients of the column located to its left so as to form a matrix A, referred to as "stepped" matrix;

   b) associating, at each input of said channel former, a switch ($C_i$) with 1 input and K+1 outputs;
   c) adding a plurality of adders ($\sum_i$) arranged between the outputs of said switches ($C_i$) and the outputs of said channel former so as to comply with the transfer function matrix A.

10. The method for designing a channel former according to claim 9, wherein, when the number K of unavailable receivers is strictly greater than the difference between the number M of outputs and the number N of inputs of said former, the transfer function matrix A is modified as follows by:

   a) selecting two adjacent columns (60) corresponding to two inputs of said former to be grouped;
   b) carrying out a circular permutation of a line toward the top of all of the columns (61) located to the right of the first column of said group (60);
   c) deleting the last line of the obtained matrix;
   d) repeating steps a), b) and c) until a number $K_1$ of groups of pairwise inputs is obtained, with $K_1=K-M+N$.

11. The method for designing a channel former according to claim 9 or 10, wherein said configurable coefficients of the matrix A can assume a value of 0 or 1 and the sum of the coefficients of each column is set to 1.

12. A method for configuring a channel former according to any one of claims 1 to 4, **characterised in that**, in order to avoid routing signals ($S_j$) received by said antenna elements toward an unavailable receiver ($Rx_i$), said method comprises:

   a) identifying the one or more unavailable receivers ($Rx_i$);
   b) assigning at most one configurable coefficient per column of said matrix A with a non-zero value if it belongs to a line of the matrix that corresponds to an available receiver ($Rx_i$);
   c) assigning a zero value to the other configurable coefficients;
   d) controlling the outputs of said switches ($C_i$) so as to comply with the configured transfer function matrix A.

FIG.1

$M \geq N$

$M < N$

FIG.2

FIG.3

FIG.4

FIG.5

EP 2 688 216 B1

FIG.6a

FIG.6b

FIG.6c

FIG.7

FIG.8

FIG.9a

FIG.9b

FIG.9c

FIG.9d

**EP 2 688 216 B1**